# EUROPÄISCHE PATENTANMELDUNG

(11) **EP 4 180 138 A1**
(43) Veröffentlichungstag der Anmeldung: **17.05.2023**
(21) Anmeldenummer: 21207951.1
(22) Anmeldetag: 12.11.2021
(51) Int. Cl.: B09B 3/10

(54) **VERFAHREN ZUR ENTFERNUNG VON SCHADSTOFFEN**

(71) Anmelder: Fraunhofer-Gesellschaft zur Förderung der angewandten Forschung e.V., 80686 München (DE)
(72) Erfinder: Burdack-Freitag, Andrea, 83626 Valley (DE); Schwitalla, Christoph, 83626 Valley (DE); Buschhaus, Michael, 83626 Valley (DE)
(74) Vertreter: Friese Goeden Patentanwälte PartGmbB

(57) **Zusammenfassung**

Die Erfindung betrifft ein Verfahren zur Entfernung von Schadstoffen aus Bauprodukten oder technischen Werkstoffen, bei welchem die Bauprodukte oder technischen Werkstoffe mit einem Mittel in Kontakt gebracht werden, das als schadstoffbindenden Wirkstoff ein Cyclodextrin enthält oder daraus besteht. Ferner betrifft die Erfindung die Verwendung von Cyclodextrinen in einem solchen Verfahren.

## Beschreibung

Die Erfindung betrifft ein Verfahren zur Entfernung von Schadstoffen aus Bau¬produkten oder technischen Werkstoffen.

Kontaminierte Bauteile, wie Mauerwerk, Holzbalken, Böden, wie sie bei Abbrucharbeiten und auch bei Naturkatastrophen wie Überschwemmungen oder Bränden entstehen oder freigelegt werden, sind häufig mit hochgradig gesundheitsschädlichen oder unangenehm riechenden Schadstoffen belastet, die schwer zu entfernen sind. Das Problem birgt aktuelle und zukünftige Brisanz, da aufgrund des klimatischen Wandels davon auszugehen ist, dass Hochwasserschäden zukünftig häufiger vorkommen werden. Zudem steht derzeit ein enormer Sanierungsbedarf von Gebäuden aus den 70-er und 80-er Jahren an, die häufig Ausbau- und Konstruktionselemente aus Holz enthalten, die mit Holzschutzmitteln behandelt wurden, die heute als krebserregend oder auf andere Weise gesundheitsschädlich, eingestufte Bestandteile enthalten.

Aus dem Stand der Technik sind verschiedene Sanierungskonzepte bekannt. Das aktuelle Standardwerk, an das sich Sachverständige und Sanierer halten, ist die Buchreihe "Bauen im Bestand", wobei insbesondere zu nennen sind:
(i) Gesamtverband Schadstoffsanierer e.V.: Schadstoffe in Innenräumen und an Gebäuden, Erfassen, Bewerten, Beseitigen; 2. Auflage, Verlagsgesellschaft Rudolf Müller GmbH & Co. KG, Köln 2014; und
(ii) Bossenmeyer H.D., Dolata S., Schubert U., Zwiener G.: Schadstoffe im Baubestand, Erkennen und richtig reagieren - mit Katalog nach Bauteilen und Gewerken; Verlagsgesellschaft Rudolf Müller GmbH & Co. KG, Köln 2016.

Der Hauptfokus bei der Schadstoffsanierung liegt auf der Reduzierung oder Unterbindung der Freisetzung von Schadstoffen aus behandelten/kontaminierten Bauteilen in die umgebende Luft (Innenraum). Damit wird die Exposition des Nutzers gegenüber Schadstoffen und somit seine gesundheitliche Gefährdung reduziert oder unterbunden. Prinzipiell kann das Problem auf vier Wegen der Sanierung gelöst werden: Weg 1: Chemische Behandlung, Reinigungs-, Dekontaminationsund Desinfektionsprozesse unter Beachtung von Schutzmaßnahmen (persönliche Schutzausrüstung, Einhausung) um Querkontaminationen, gesundheitliche Beeinträchtigungen und ökologisch bedenkliche Nebeneffekte zu vermeiden. Weg 2: Entfernen von Bauteilen oder ein kompletter Abriss mit anschließender Entsorgung als "Sondermüll". Weg 3: Erhöhung der Luftwechselraten in den zu sanierenden Räumen, um die Schadstoffbelastung auszulüften, teilweise unter Vorgabe von zusätzlichen Schutzmaßnahmen beim Betreten (z.B.: Atemschutzmasken in historischen Depots), unter Inkaufnahme eines hohen energetischen Aufwands zur Gewährleistung der vollständigen Belüftung. Weg 4: Versiegelung der Oberflächen bzw. Einschluss der Schadstoffe; dies ist bei gering kontaminierten Bauteilen möglich, aber nicht bei hoch kontaminierten Bauteilen, da übliche Versiegelungen nur bedingt diffusionsdicht sind. Zudem ist eine Versiegelung bei historisch wertvollen Oberflächen oft nicht durchführbar. Es zeigt sich, dass je nach Fall (Konzentration und Natur der Schadstoffe und der zu behandelnden Substrate) jeweils einzelne der genannten Wege sich als zielführend erweisen können. Jeder Weg für sich birgt jedoch unerwünschte Nebeneffekte.

Ausgehend vom Stand der Technik liegt der Erfindung die Aufgabe zugrunde, die Entfernung bzw. Unschädlichmachung von Schadstoffen in einfacher, wirksamer und zuverlässiger Weise zu ermöglichen.

Die Aufgabe wird erfindungsgemäß durch ein Verfahren gemäß Anspruch 1 und eine Verwendung nach Anspruch 8 gelöst. Vorteilhafte Weiterbildungen der Erfindung finden sich in den Unteransprüchen.

Die Aufgabe wird erfindungsgemäß durch ein Verfahren zur Entfernung von Schadstoffen aus Bau¬pro-dukten oder technischen Werk¬stoffen gelöst, das sich dadurch auszeichnet, dass die Bauprodukte mit einem Cyclodextrin in Kontakt gebracht werden.

Unter einem Bauprodukt im Sinne der vorliegenden Erfindung wird jedes natürliche oder künstliche Material verstanden, das zum Errichten von Bauwerken und Gebäuden verwendet werden kann. Beispiele dafür sind Sandstein, Kalkstein, Beton, Ziegel, Kalksandstein, Holz, Holzwerkstoffe, Dämmstoffe, Putze, Mörtel, Metalle oder Legierungen oder Keramik, aber auch Materialien für den Innenausbau von Geschäfts- und Wohnräumen, wie zum Beispiel Wand- und Bodenbeläge, Teppiche, Polymere, Kunststoffe oder Fliesen. Andere gemäß der Erfindung behandelbare Materialien werden als "technische Werkstoffe" bezeichnet und können nahezu beliebige kontaminierbare Materialien für technische Anwendungen sein, beispielsweise aus dem Fahrzeugbau, dem Maschinenbau, dem Schiffbau oder anderer, hier nicht genannter technischer Gebiete.

Unter einem Schadstoff im Sinne der vorliegenden Erfindung werden Stoffe oder Stoffgemische verstanden, die schädlich für Menschen, Tiere, Pflanzen oder andere Organismen sowie ganze Ökosysteme sein können, oder die einen unangenehmen Geruch entfalten und dadurch eine angestrebte Nutzung unmöglich machen oder behindern. Rechtliche Grundlage für die Einstufung als Schadstoff ist dabei insbesondere die jeweils aktuelle Version der Europäischen REACH-Verordnung (Verordnung (EG) Nr. 1907/2006 (REACH)). Beispiele für Schadstoffe sind Stoffe, die aus Heizöl, Lösungsmitteln oder Holzschutzmitteln stammen oder die beispielsweise polycyclische aromatische Kohlenwasserstoffe (PAK) sind und früher häufig in technischen und elektrischen Einrichtungen zur Anwendung kamen. Insbesondere stammen problematische Schadstoffe aus früheren oder aktuellen Heizölschäden (wie nach einem Hochwasser), eingesickerten industriellen Lösungsmitteln (z.B. aus Industrie- und Reingungsprozessen) oder sind biozide Additive von bewusst aufgebrachten Holzschutzmitteln (u.a. Pentachlorphenol (PCP) und Lindan (gamma-HCH)); Isothiazolinon-Verbindungen wie Methylisothiazolinon (MIT) oder Benzoisothiazolinon (BIT)) oder sind polycyclische aromatische Kohlenwasserstoffe, die sich z.B. in alten teer- oder teerölbehandelten Materialien oder in Kautschukprodukten finden, in denen sie früher z.B. als Weichmacheröle eingesetzt wurden, oder die auch auf natürliche Weise bei Bränden gebildet werden können. Die meisten problematischen Schadstoffe sind unpolare, schlecht wasserlösliche Stoffe einer geringen bis mäßigen Flüchtigkeit, die ihre Schädlichkeit und ihre störenden Geruchseigenschaften lange beibehalten.

Erfindungsgemäß erfolgt die Entfernung bzw. Unschädlichmachung von Schadstoffen der genannten Art unter Verwendung von Cyclodextrinen (nachfolgend als "CD" abgekürzt).

Cyclodextrine (CDs) sind biologisch abbaubare und gesundheitlich unbedenkliche Stoffe, die u.a. die Fähigkeit besitzen, Schadstoffe und Gerüche unter Bildung von Einschlußverbindungen zu absorbieren bzw. zu maskieren. CDs stellen einen Oberbegriff für eine Gruppe von chemischen ähnlichen Zuckern dar. Die CDs wurden erstmals von Schardinger 1903 beschrieben (vgl. Gregorio Crini: The contribution of Franz Schardinger to cyclodextrins: a tribute on the occasion of the centenary of his death; Journal of Inclusion Phenomena and Macrocyclic Chemistry, 2020, Volume 97, 19-28). CDs sind cyclische Zucker (Oligosaccharide), die durch den enzymatischen Abbau von Stärke gewonnen werden. Typische native Cyclodextrine enthalten sechs, sieben oder acht Glucoseeinheiten, welche als α-, β-bzw. γ-Cyclodextrine bezeichnet werden. Strukturell sind es hohle, kegelstumpfförmige Ringmoleküle, die aus mehreren Glucoseeinheiten bestehen. In ihrem Kern bildet sich ein Hohlraum (eine Kavität) aus. CDs weisen, je nach Molekültyp, eine gute bis sehr gute Wasserlöslichkeit auf und können daher in Form von wässrigen Lösungen für eine beabsichtigte Verwendung aufbereitet werden.

Die Kavität der CDs ist in der Lage, zahlreiche Stoffe aufzunehmen und zu binden, insbesondere unpolare Stoffe. Unpolare organische Verbindungen (wie z.B. Heizölbestandteile) und aromatische Verbindungen (wie z. B. Lindan/PCP) diffundieren aus Oberflächen und Lösungen heraus, haben eine hohe Affinität in die Kavität einzudringen und werden dort gebunden. Man spricht von Komplexierung oder Maskierung. CDs werden in hochreiner Form im industriellen Maßstab unter anderem von der Firma Wacker hergestellt. Sie finden, in einer für die beabsichtigte Verwendung erforderlichen Reinheit, breiten Einsatz u.a. in Kosmetika zur gezielten Freisetzung von Duft- und Wirkstoffen, sowie in Pharmazeutika zur Verkapselung von Wirkstoffen, um sie an den Zielort zu transportieren. Auch im Lebensmittelbereich werden sie eingesetzt, um verschiedene erwünschte Wirkungen auszuüben, z.B. um in SmartFresh-Produkten flüchtiges Methylcyclopropen zur Blockierung des Reifungshormons Ethylen in eine gut handhabbare, bevorrateten Früchten zusetzbare feste Form zu überführen. Zudem wird die Eigenschaft der CDs genutzt, unangenehme Gerüche und Geschmäcke zu binden, z.B. in Innenräumen, im Haushalts- und Wohnbereich. Das bekannteste Mittel ist ein Geruchsentferner, der unter der Marke "Febreze" im Handel ist. In der Altlastensanierung können sie auch in technischer Qualität verwendet werden, um Umweltschadstoffe aus Böden und Gewässern zu binden. Der Vorteil der CDs liegt in deren Kavitäten-Struktur und unauffälligen Farbe, sofern diese in Produkten technischer Qualität nicht durch gefärbte Nebenprodukte verunreinigt sind.

Die Wirkung besteht in der chemischen Maskierung von Schadstoffen als auch in deren chemischer Bindung durch Diffusion in die Kavität der CDs und je nach Art ihres Einsatzes in der rückstandslosen Entfernung oder Versiegelung der Poren bei geringer Störung der Oberflächenstruktur. Je nach chemischer Natur des Schadstoffes kann eine andere Struktur des eingesetzten CDs (aktuell alpha bis gamma) angewendet werden, um eine optimale Bindung/ Maskierung in die Kavität zu erreichen. Zu den Vorteilen gehört die schadensfreie Erhaltung von schützenswerten Oberflächen (z.B. bei historischen Hölzern) und in der nachgewiesenen ökologischen Unbedenklichkeit der CDs. Als Filme aufgebracht reduzieren sie den Eintrag von Schadstoffen in die Innenraumluft; als entfernbare Suspension oder Emulsion aufgebracht, lösen sie die Schadstoffe aus den obersten Schichten heraus und können problemlos entsorgt werden. Die Einbindung von Schadstoffen in CDs ermöglicht für eine ganze Gruppe an Mikroorganismen eine Bioverfügbarkeit, so dass die schadstoffhaltigen behandelten Materialien mikrobiologisch abgebaut werden können (biologische Abbaubarkeit). Im Falle von CDs, die mit kritischen, nicht anderweitig verwertbaren Schadstoffen beladen sind, können diese in geeigneten Sondermüllverbrennungsanlagen verbrannt werden, um diese Schadstoffe zu eliminieren. In jedem Fall erfolgt eine Verminderung der zu entsorgenden Abfallmenge (z.B. es müssen nicht komplette kontaminierte Gebäude entsorgt werden).

Für ihren Einsatz werden die Cyclodextrine vorzugsweise in Form geeigneter Mittel als Anwendungsformulierungen aufbereitet. Dabei ist es in der Regel nicht erforderlich, CDs in einer für pharmazeutische oder kosmetische Anwendungen hochgereinigten Form einzusetzen. Bei einer erfindungsgemäßen Verwendung werden, je nach Einsatzfall, cyclodextrinhaltige Mittel auch für eine Behandlung großer Flächen und daher in erheblichen Mengen benötigt. Andererseits sind die Mittel nicht für eine Aufnahme durch den menschlichen Körper oder zum Aufbringen auf eine menschliche Haut bestimmt. Es liegt daher im Bereich der vorliegenden Erfindung, gering aufgereinigte, kostengünstigere cyclodextrinhaltige Produkte technischer Qualität zu verwenden, zumal diese aufgrund der in der Regel unschädlichen Ausgangsmaterialien für ihre Herstellung kein Gesundheitsrisiko darstellen. Für den mengenmäßig hohen Einsatz finden hauptsächlich alpha- und beta-CDs Anwendung, da es sich bei beiden um günstige, großtechnische Produkte handelt. Die Unbedenklichkeit solcher Produkte technischer Qualität für eine beabsichtigte Verwendung kann vor dem praktischen Einsatz nötigenfalls analytisch bestätigt werden.

Soweit im speziellen Anwendungsfall möglich, können die Cyclodextrine vorzugsweise in Form von Präparaten auf Wasserbasis zum Einsatz kommen. Diese können für die beabsichtigte Verwendung hilfreiche Zusätze enthalten, z.B. Filmbildner, Netzmittel, Antioxidantien. Besonders bieten rheologische Additive die Möglichkeit, CDs als wasserbasierte Beschichtung, z.B. Lack, Lasur, herzustellen, um eine einfache Anwendung zu ermöglichen. Die Zusätze erleichtern z.B. eine erwünschte Filmbildung beim Auftrocknen wässriger Mittel, oder fördern ein Eindringen in ein Substrat vor dem Trocknen. Die CDs können zur Erzielung spezieller Wirkungen auch in Form von Mitteln aufbereitet werden, die als Emulsionen vorliegen (Öl-in-Wasser oder Wasserin-Öl), wobei die CDs aufgrund ihrer Löslichkeitseigenschaften in der Regel in der Wasserphase zu finden sind. Die Mittel können auch wachsbasiert sein, z.B. in Form einer Holzpolitur vorliegen. Ferner können die Mittel auch für ein Versprühen formuliert werden, oder als Anstrichmittel, wobei für den jeweiligen Anwendungszwecke förderliche Hilfsstoffe vorhanden sein können, z.B. auch flüchtige Treibmittel wie Butan oder CO₂ oder filmbildende Trägerstoffe.

Bei bestimmten Anwendungsvarianten wird das Cyclodextrin in Form eines geeigneten flüssigen Mittels auf die Oberfläche des Bauprodukts aufgebracht, um die Schadstoffe entweder zu maskieren (Ausbildung eines Schutzfilms) oder gezielt die Schadstoffe herauszulösen (als Lösemittel) und zu binden. Durch Abwaschen können die schadstoffbeladenen Cyclodextrine ggf. in die Waschflüssigkeit überführt und mit dieser entsorgt werden.

Als Bestandteile von Schutzfilmen sind die CDs farblos. Sie sickern mit ihrer Trägerflüssigkeit in die Oberflächenstruktur ein und verschließen die Poren bzw. Materialkavitäten, Risse usw., so dass die Schadstoffe nicht mehr heraustreten können. Nach einiger Zeit kann dieser Vorgang wiederholt werden. Aufgrund dessen ist eine einfache Applikation möglich, bei der die Oberflächenstruktur optisch nicht verändert wird. Diese Behandlung bietet sich besonders für denkmalgeschützte Bauteile an, besonders solche, bei denen die Oberfläche von historischer Bedeutung ist (z.B. besondere Farben, Beschläge).

Als "Lösemittel" formuliert können sie aus den obersten Schichten einer behandelten Oberfläche Schadstoffe herauslösen. Die Wirksamkeit und Dauerhaftigkeit der Behandlung ist abhängig von der Behandlungsintensität und Behandlungsdauer sowie der Oberflächenstruktur. Eine solche Behandlung ist besonders für Werkstoffe oder Baustrukturen geeignet, die im Nachgang einen weiteren Ausbau zulassen.

Es liegt im Rahmen der vorliegenden Erfindung, die Cyclodextrine bzw. cyclodextrinhaltigen Mittel auch in fester Form einzusetzen, z.B. als Pulver oder Stäube, ggf. in Mischung mit Streck- oder Stellmitteln. Dabei kann vorgesehen sein, dass ein Auflösen erst nachgeordnet beim Kontakt mit einem feuchten behandelten Substrat erfolgt.

In einer bevorzugten Ausführungsform ist das Cyclodextrin ein α-, β- oder γ-Cyclodextrin oder eine Mischung von zwei dieser Cyclodextrine. Auch eine Verwendung von Cyclodextrinderivaten, auch von neuartigen mit einer speziellen Kavitätengröße oder -struktur, liegt im Bereich der vorliegenden Erfindung. Durch Auswahl eines besonders geeigneten Cyclodextrins ist eine Optimierung im Hinblick auf die Entfernung eines bestimmten Schadstoffs möglich, z.B. indem die Kavitätengröße der Molekülgröße des Schadstoffs angepasst wird.

Eine "Lösemittel-Behandlung" ist wie beispielsweise als Behandlung von Kellergewölben oder Böden möglich. Prinzipiell sind dabei zwei Vorgehensweisen möglich:
Cyclodextrinhaltige Mittel können als Suspension auf die Oberfläche aufgebracht werden und quasi als "Peeling-Packung" die Schadstoffe herauslösen. Diese wird nach genügender Einwirkzeit abgelöst (abgewaschen, abgesaugt, abgebürstet o.ä.). Somit werden die oberflächennahen Schadstoffe entfernt und gelangen nicht mehr in die umgebende Luft. Diese Methode kann für unebene und raue Oberflächen, wie Hölzer und Mauersteine verwendet werden. Unter einer Suspension im Sinne der vorliegenden Erfindung wird die feinste Verteilung sehr kleiner Teilchen eines festen Stoffes in einer Flüssigkeit verstanden, so dass sie darin schweben. Als flüssige Trägerphase für die CDs können dabei sowohl polare als auch unpolare Lösemittel eingesetzt werden.

Die Mittel können auch als Waschlösung (Emulsion) auf die Oberfläche aufgebracht werden und wieder heruntergelöst werden. Diese Behandlung ist insbesondere für glatte Oberflächen geeignet, bei denen die Feuchtigkeit nicht in die Struktur eindringen kann, wie z.B. Parkett, Lack- und Kunststoffoberflächen oder Fliesen. Eine Emulsion im Sinne der vorliegenden Erfindung ist ein Stoffgemisch aus zwei nicht mischbaren, ineinander unlösbaren Flüssigkeiten, bei dem die eine Flüssigkeit in Form kleiner Tröpfchen in der anderen verteilt ist.

Gegenstand der vorliegenden Erfindung ist ferner generell die Verwendung mindestens eines Cyclodextrins als Wirksubstanz zur Entfernung von Schadstoffen aus Bauprodukten oder technischen Werkstoffe nach dem vorstehend beschriebenen erfindungsgemäßen Verfahren.

Das erfindungsgemäße Verfahren bzw. die erfindungsgemäße Verwendung kann insbesondere auf folgenden technischen Gebieten eingesetzt werden:
- bei mit Heizöl oder mit Fäkalien kontaminierten Mauerwerken und Böden nach Öl-Havarien,
- bei Hochwasserschäden, Sanitär- und Kanalisationsschäden,
- bei der Entfernung von Holzschutzmitteln aus behandelten Hölzern in Altbauten und historischen Gebäuden,
- beim Umbau von früheren industriellen, schadstoffkontaminierten Gebäuden, die in Wohnungen umfunktioniert werden sollen,
- zur Behandlung ehemaliger Bauteile, die aufgrund von Schimmelbefall immer noch Fehlgerüche aufweisen,
- zur Sanierung von ehemaligen Stallungen für zukünftige Nutzungen als Wohnungen, Büros oder für die Gastronomie,
- bei einer aufgrund von Hochwasser- oder Heizölschäden verursachten Kontamination von elektrischen Geräten, elektrischen Rettungsmitteln oder elektrischen Hilfsmitteln.

Die Erfindung wird nachfolgend anhand einer Figur und von Modell-Beispielen noch näher erläutert, ohne dass dadurch der Erfindungsgedanke auf den bespielhaft gezeigten Fall eingeschränkt werden soll.

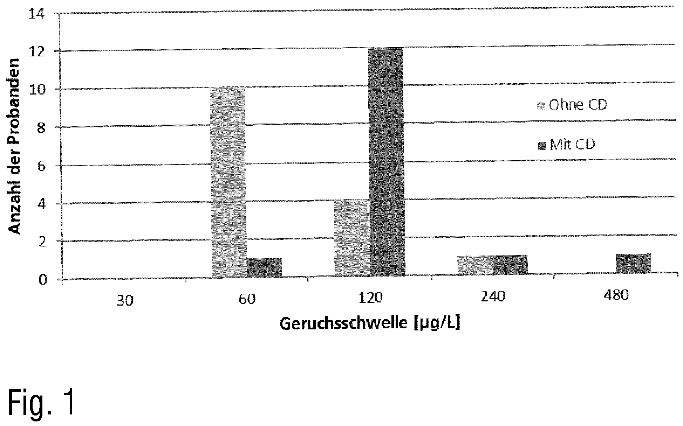

Dabei zeigt Fig. 1 die Untersuchungsergebnisse für eine Maskierung von Kresolen (Methylphenolen) in Anwesenheit eines Cyclodextrin-Präparats.

### Beispiel:

In einem Modellversuch wurde die Bindung bzw. Maskierung von Kresolen (Methylphenolen) in einem wässrigen Medium mit Hilfe von Cyclodextrin untersucht. Kresol kommt als Geruchsstoff z.B. in Heizöl vor und hat eine sehr niedrige Wahrnehmungsschwelle, d.h. es wird schon in sehr geringen Mengen (in µg pro m³ Luft) geruchlich wahrgenommen. Als Benzolderivat hat es eine ähnliche 6-Ring-Struktur wie Lindan (Hexachlorcyclohexan).

Geruchlich geschulten Testpersonen (Probanden) wurden in einem sensorischen Triangeltest (gemäß DIN EN ISO 4120, Sensorische Analyse - Prüfverfahren - Dreiecksprüfung, 10/2007 und Berichtigung 08/2009) Vergleichslösungen mit einem variierenden Gehalt von Kresol präsentiert. In einer Testserie waren die Kresole nur in Wasser verteilt, in der zweiten die gleichen Konzentrationen in Wasser, dem ein Cyclodextrin zugesetzt war. Bei Zusatz von Cyclodextrin erhöhte sich die Geruchsschwelle um 50 %, d.h. der KresolGeruch wurde von den meisten Probanden erst bei erheblich höherem Kresolanteil, d.h. weniger stark, wahrgenommen. Die Geruchsschwelle wird somit angegeben als Zahl derjenigen Probanden, die den Kresolgeruch bei einer angegebenen Konzentration erstmals wahrgenommen haben (vgl. Fig. 1).

Der Versuch zeigt die Wirksamkeit von Cyclodextrin zur Bindung (Maskierung) eines wenig polaren (nur wenig wasserlöslichen) geruchsintensiven Schadstoffs wie Kresol in einem wässrigen Medium.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Verfahren zur Entfernung von Schadstoffen aus Bauprodukten oder technischen Werkstoffen, **dadurch gekennzeichnet, dass** die Bauprodukte oder technischen Werkstoffe mit einem Mittel in Kontakt gebracht werden, das ein Cyclodextrin enthält oder aus einem solchen besteht.

2. Verfahren nach Anspruch 1, **dadurch gekennzeichnet, dass** das Bauprodukt ausgewählt ist aus Sandstein, Kalkstein, Beton, Ziegel, Kalksandstein, Holz, Holzwerkstoff, Dämmstoff, Putz, Mörtel, ein Wand- oder Bodenbelag, Teppich, Polymer, Kunststoff, einem Metall oder einer Legierung oder Keramik oder Gemische dieser Materialien.

3. Verfahren nach einem der Ansprüche 1 oder 2, **dadurch gekennzeichnet, dass** die Schadstoffe aus Heizöl, Lösungsmitteln, Holzschutzmitteln stammen oder polycyclische aromatische Kohlenwasserstoffe enthalten oder daraus bestehen, oder ein anderer Schadstoff im Sinne der Europäischen REACH-Verordnung (Verordnung (EG) Nr. 1907/2006 (REACH)) sind.

4. Verfahren nach einem der Ansprüche 1 bis 3, **dadurch gekennzeichnet, dass** das Cyclodextrin ein α-, β- oder γ-Cyclodextrin oder eine Mischung von zwei oder mehr dieser Cyclodextrine, oder ein Cyclodextrinderivat, ist.

5. Verfahren nach einem der Ansprüche 1 bis 4, **dadurch gekennzeichnet, dass** das Mittel, das Cyclodextrin enthält oder daraus besteht, auf die Oberfläche des Bauprodukts oder technischen Materials aufgebracht wird, um die Schadstoffe entweder zu maskieren oder herauszulösen.

6. Verfahren nach Anspruch 5, **dadurch gekennzeichnet, dass** das Cyclodextrin enthaltende oder daraus bestehende Mittel auf die Oberfläche des Bauprodukts in Form einer Suspension aufgebracht wird.

7. Verfahren nach Anspruch 5, **dadurch gekennzeichnet, dass** das Cyclodextrin enthaltende oder daraus bestehende Mittel auf die Oberfläche des Bauprodukts in Form einer Emulsion aufgebracht wird.

8. Verwendung mindestens eines Cyclodextrins in einem Mittel zur Entfernung von Schadstoffen aus Bauprodukten oder technischen Werkstoffen nach einem Verfahren nach einem der Ansprüche 1 bis 7.
